# NEW EUROPEAN PATENT SPECIFICATION

(11) **EP 1 031 119 B2**
(45) Date of publication and mention of the opposition decision: **17.09.2014**
(45) Mention of the grant of the patent: 24.07.2002
(21) Application number: 98947411.9
(22) Date of filing: 08.10.1998
(51) Int. Cl.: G08B 1/08

(54) **A SIGNALLING SYSTEM AND A METHOD FOR CONTROLLING THE SERVICE AT A RESTAURANT**
SIGNALISIERUNGSSYSTEM UND VERFAHREN ZUR ÜBERWACHUNG DER BEDIENUNG IN EINEM RESTAURANT
SYSTEME DE SIGNALISATION ET PROCEDE POUR CONTROLER LE SERVICE DANS UN RESTAURANT

(30) Priority: 12.11.1997 DK 128597
(43) Date of publication of application: 30.08.2000
(73) Proprietor: P. Jørgensen Holding ApS, 5250 Odense SV (DK)
(72) Inventor: Andersen, Allan, 5230 Odense M (DK)
(74) Representative: Holme, Edvard
(86) International application number: PCT/DK1998/000437
(87) International publication number: WO 1999/024948

(56) References cited:
- EP-A2- 0 202 408
- DE-A1- 3 504 371
- US-A- 5 006 983
- US-A- 5 642 102

## Description

The invention relates to a signalling system for controlling the service at a restaurant where a guest at e.g. a counter can order a product, such as a hot meal for later handing over.

At restaurants as for example cafeterias, it is common practise that the guests order and pay for the wanted products at a counter to later receive the products in return for a coupon which the guest was originally given as receipt and which has a code in the form of normally a number for identification of the order.

The ordered product can e.g. be a hot meal which has to be prepared first. When the food is ready, contact must be established with the guest in order for the hot meal to be handed over as soon as possible. This can e.g. take place by one of the staff trying to deliver the ordered hot meal to the relevant guest at a specific table. However, this process is demanding and difficult to carry out with certainty as it can be difficult to distinguish one guest from the other in passing.

A less demanding method for establishing contact with the guest consists in calling out the code in the room by means of e.g. a loudspeaker. Thereby, the guest's attention is drawn to the fact that he or she can now fetch the hot meal him-/herself at the counter. However, the method is noisy and therefore an inconvenience for the guests present. It can furthermore be difficult to quite make out the code when there are other guests nearby who are talking in a more or less loud manner, or when there is music at the restaurant. Thereby, misunderstandings can arise and there is a risk of the product being given to the wrong guest.

These disadvantages can be relieved to some extent by means of another known method where the code is shown on one or more display panels when the product is ready for handing over.

However, this method is troublesome to the guest who has to keep his attention directed to the display panel during the period of waiting and in this connection, often has to turn round in order to be able to see the display panel. The solution is therefore not ideal. When several codes appear on the display panel at the same time, which often is the case, this can furthermore easily cause misunderstandings and confusion.

A more discrete solution could be that the guest stated his selected table number when ordering the product, and that the staff subsequently signalled, by means of e.g. a signal lamp on the table, to the guest that the product is now ready for handing over. However, this method is not very expedient as the guest first have to find and occupy a table, and this can be difficult to do in an especially crowded room. At restaurants arranged in such a way that the guest first orders the product and then finds a table, the method is almost inapplicable. If the e are several guests at one table, the guests can furthermore have trouble finding out for whom the signal is really intended.

Document DE-A-3504371 discloses a radio paging system for informing waiters that a meal is ready. Document US-A-5006983 discloses a wireless pafing system notifying costumers that a service resource is available.

The object of the invention is to provide a signalling system of the kind mentioned in the opening paragraph, which is more secure, effective, and convenient to use than known so far, and which at the same time is functioning without disturbing the guests present.

Claim 1 discloses the novel and unique features according to the invention, whereby this is achieved.

By means of this signalling system, a guest can conveniently sit down at any table and if needed also move to another table after the order has been given as the guest is now bringing a handed-over indicator bearing the code which corresponds to the order. When the product is ready to be handed over, the staff activates the indicator which thereby is made to emit a light or sound signal for attracting the attention of the guest. The guest can then go to the counter and in return for the indicator receive his product, or alternatively have the staff serve the product at the table.

The signalling system is functioning in a very discrete manner. It is furthermore customer-related in such a way that the possibility of mistakes being made is almost completely eliminated. The only demand is that the staff makes the transmitter emit a signal that represents the correct code when the product is ready for handing over.

The operation of the transmitter can advantageously take place by means of a remote control which has a keyboard for entry of the code which in each individual case corresponds to the ordered product.

When the transmitter is placed high up by the ceiling above the tables of the restaurant, the advantage is obtained in that the transmitter can cover fairly many tables at the same time.

The transmitter can be functioning according to any suitable principle, for example with radio waves or electromagnetic coupling with use of the wire loop principle.

In a particularly preferable embodiment, infrared pulse technique is used. On ordering, the guest is instructed to place the handed-over indicator freely on his table in such a way that operative contact can be established from infrared transmitters on the ceiling of the room with the indicator which then reacts selectively when the transmitter emits the specific signal that represents the code which corresponds to the ordered product.

An indicator can conveniently be in the form of a preferably flat disc with a housing containing the receiver and the caller, and a battery for via a switch supplying the receiver and the caller with current. On the outside of the house, there can furthermore be placed a text and/or illustration which at least includes the distinctive mark of the respective code in the form of e.g. a number.

These discs will be more expensive to manufacture than simple coupons but they will not be very liable to disappear because of theft or forgetfulness. This is partly due to the fact that the discs cannot easily be used by others, partly that it is natural that the discs which the guest receive upon ordering must be given back when the guest later fetches the ordered product even if it was paid for somewhere else. Besides, the discs can be manufactured relatively inexpensively in mass production. If the discs are provided with advertising imprints, the loss of a few discs will moreover not mean any noticeable loss as the discs will still be an advertising medium.

As long as the battery of the disc is permanently connected, it will run down even if the disc is not actively in use. In order to make the battery last as long as possible, the signalling system therefore comprise a magazine in which the discs are stacked on top of each other along a magnetic list for disconnecting the battery connection of the disc by magnetic action of a switch in the form of typically a red-switch.

The discs are expediently put in the magazine from above and taken out from the bottom. When a disc is removed from the magazine, the switch will no longer be exposed to the magnetic action, and the switch therefore reconnects the battery so that the disc again is brought in operative condition and therefore again can be used as an indicator of a guest.

At the bottom, the magazine can have a stop for supporting the stack of discs, and this stop can be arranged in such a way that one and only one disc can be taken out of the magazine at a time.

There will be no need for any call to the individual discs as long as they are in the magazine which therefore advantageously can be placed at or between the ordering and the delivery position (if these are not the same) so that the magazine is filled at the delivery position and the discs are removed one at a time at the ordering position.

The signalling system can be arranged to be able to sustain the call signal to the individual disc for a relatively long time by means of e.g. a form of scanning where the system in a number of pulse sequences is able to sustain short, repeated call signals to all of the last handed-over discs for a period of time which can be fixed according to different criteria.

In a preferred embodiment, discs are however used that in a self-sustaining way will generate their alarm signal, for example short showers of flashes from a light-emitting diode, once they have been triggered by command signals and right until they have been passivated by returning to the magazine. Usually, the guests will react fairly quickly to the first "ready signal", which means that the batteries will only be drained for a relatively short period at a time. The command signals can then be sustained for a relatively short period, e.g. 10-15 min. If needed, the discs can have a timer that stops the signalling after a fixed longer period, e.g. ½ hour, if the discs are not returned to the magazine before this.

However, the invention is not limited to any specific technique of activating the discs as other solution models can be chosen including in combination that the signalling of the discs is only self-sustaining for a short period of time, e.g. one minute, after which they can demand reactivation from the transmitter equipment just as often. The command signal can then be suppressed after a certain prescribed time or by registering the arrival of the discs to the magazine.

In an alternative embodiment, discs can be used that do not have batteries. In this case, a specific "waiting location" for the discs is prescribed. The location can e.g. be a clearly marked central area on the table. The disc can then be supplied with current from an induction coil placed under said central area.

The invention will be explained in greater detail below, describing only an example of an embodiment with reference to the drawing, in which
Fig. 1 is a schematic view of a block diagram of a signalling system according to the invention,
Fig. 2 is a schematic view of the circuit in an indicator for the signalling system in fig. 1,
Fig. 3 is a perspective view seen obliquely from above of the indicator in the form of a disc,
Fig. 4 is a side view in fragments and partly in section of a magazine for the discs in fig. 3, and
Fig. 5 is the magazine in fig. 4 seen from above.

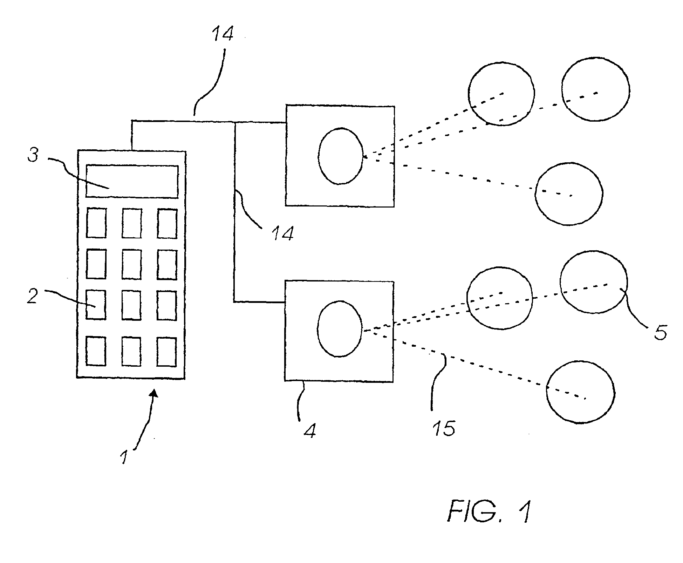

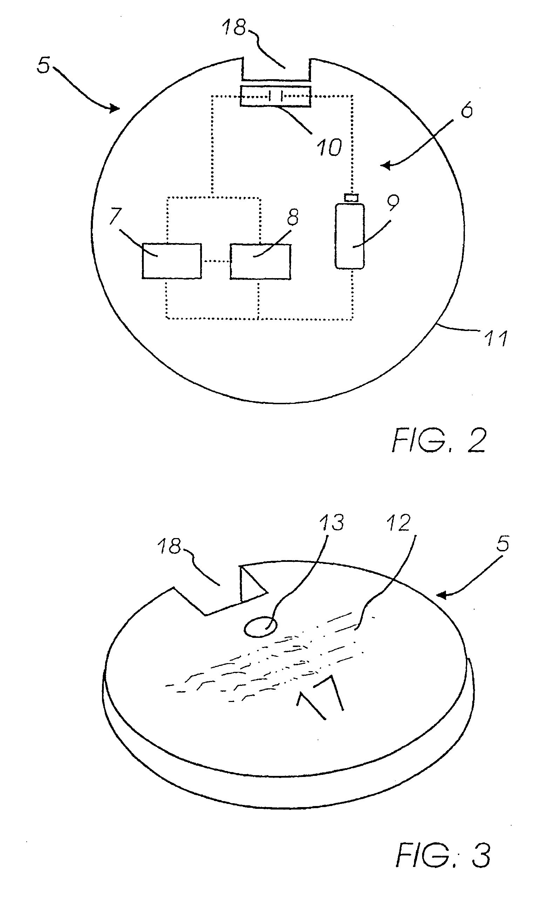

The signalling system according to the invention in fig. 1 comprises a remote control 1 with a keyboard 2 and a display 3, and in this case, two transmitters 4 and a number of indicators 5 each in the form of a disc as shown in fig. 2 and 3.

Fig. 2 shows a circuit 6 in such a disc. The circuit comprises a receiver 7, a caller 8, a battery 9, and a switch in the form of a red-switch 10. The entire circuit is enclosed in a flat housing 11 forming the exterior of the disc.

The discs are precoded with each their code which in the case of the disc in fig. 3 is the number 17 which is clearly marked on the outside of the disc. The disc 17 is furthermore provided with an imprint which can be an advertisement and/or instructions on how the system functions and is used. The reference number 13 indicates a caller in the form of a light-emitting diode.

It is in this case assumed that the transmitters 4 are functioning with an infrared pulse technique. In practise, the transmitters are placed on the ceiling of a restaurant (not shown) so that their infrared rays can reach a large area in the room.

When a guest wants e.g. a hot meal, he or she approaches the counter (not shown) of the restaurant and gives an order and normally pays at the same time. As receipt, the guest receives a disc which e.g. might be the disc 17. The guest places this disc on his table and now calmly waits for the food to be ready for handing over.

When this is the case, the staff enters the number 17 on the keyboard 2 of the remote control 1 for the transmitters 4 via wires 14. Thereby, the transmitters are made to emit infrared rays 15 into the room in a form that represents the number 17.

The disc 17 is the only disc which is coded with this specific number. It is therefore only the receiver 7 of the disc 17 that is now activated by the emitted infrared rays. The receiver in the circuit 6 of the disc in its turn activates the caller 8 which in the case shown in fig. 3 is the light-emitting diode 13. In other cases, the caller can be a sound emitter.

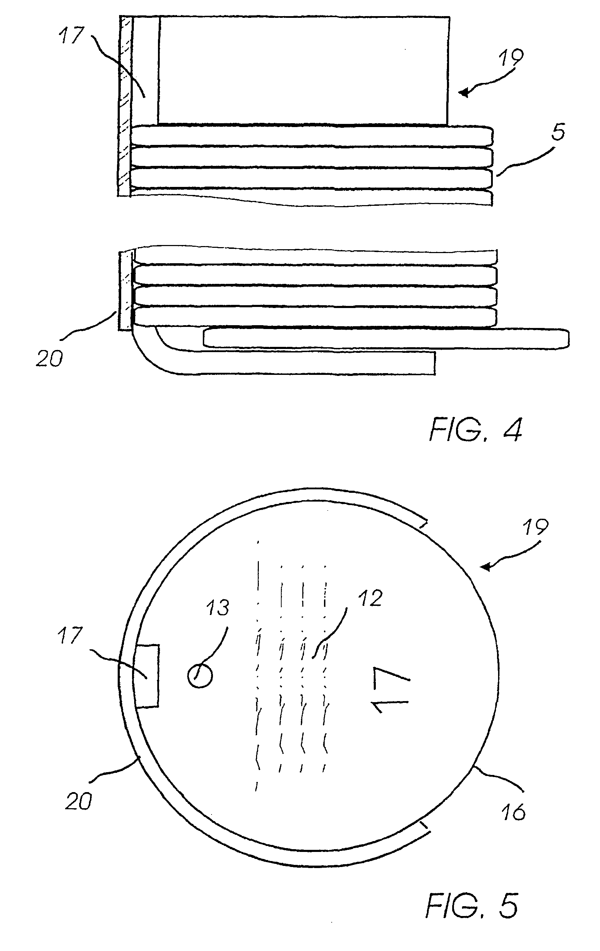

The guest, who is thereby informed that the meal is ready to be fetched, then walks up to the counter and receives the ordered meal against returning the disc to the staff who then places the disc in the magazine 19 shown in fig. 4 and 5.

Alternatively, the guest calls the staff by e.g. waving the disc in order to have the meal served at the table.

The magazine consists of a vertically placed tube 20 with a wide, longitudinal slot 16. On the inner side of the tube 20 opposite the slot 16, a longitudinal magnetic list 17 is placed that fits a notch 18 made in each disc 5.

As shown in fig. 2, the switch 10 in the form of a red-switch is situated immediately behind this notch 18. When the discs are in the magazine 19, the switch is therefore affected by a magnetic field which switches off the switch so that the circuit 6 no longer uses power. Thereby, the active life of the battery is advantageously prolonged.

At the bottom, the magazine has a projecting stop which prevents the stack of discs from falling out of the magazine but allows the bottom disc and only this to be pulled out as the stop is placed in such a way that the lower edge of the tube is placed a little above the top side of the bottom disc.

When a new guest orders a product, the staff pulls the bottom disc out of the magazine and gives it to the guest. As soon as the disc is out of the magazine, the magnetic action on the switch 10 stops, and the disc is therefore immediately operational again.

## Claims

1. A signalling system for controlling the service at a restaurant where a guest at e.g. a counter can order a product, such as a hot meal for later handing over, the system comprises at least one transmitter (4) arranged to, upon operation, emit wireless signals that represent a number of predetermined codes, a number of indicators (5), and each having its own receiver (7) which is precoded individually with one of the codes for, upon receipt of a wireless signal representing the respective code, activating a caller (8) belonging to the indicator to, with a sound and/or light signal, call a guest who has been given the indicator in question in connection with his order, each indicator (5) comprises a preferably flat housing (11), and the said receiver (7) and the said caller (8) are built into the said housing (11), **characterised in that** a text (12) and/or an illustration at least comprising the mark of the respective code is placed on the exterior of the housing (11) such that the indicator is arranged as a coupon, which by means of the code of the indicator uniquely links the guest to the ordered product, and **in that** a magazine (19) belongs to the system for, by preferably vertical stacking, storing indicators (5) that are not in use, and that this magazine comprises a magnetic list (17) extending along the stacked indicators and serving for switching off magnetic power switches (10) of these indicators (5).

2. A signalling system according to claim 1, **characterised in that** a remote control (1) with a keyboard (2) arranged to, upon entry of one of each of the predetermined codes, make the transmitter (4) emit a wireless signal which represents the entered code belongs to the transmitter.

3. A signalling system according to claim 1 or 2, **characterised in that** the transmitter (4) is placed at a relatively high place, such as the ceiling of the restaurant.

4. A signalling system according to claim 1, 2, or 3, **characterised in that** the transmitter (4) is arranged to emit wireless signals in the form of infrared light.

5. A signalling system according to each of the claims 1 - 4, **characterised in that** a battery (9) furthermore is built into the housing (11) for via the magnetic power switch (10) supplying the receiver (7) and the caller (8) with current.

6. A signalling system according to claim 1, **characterised in that** the magnetic beam of the magazine at the bottom has a stop extending mainly transversely to the magnetic list (17).

## Patentansprüche

1. Signalsystem zur Organisation der Bedienung in einem Restaurant, in dem ein Gast zum Beispiel an einem Schalter ein Produkt wie eine warme Mahlzeit zur späteren Ausgabe bestellen kann, wobei das System umfasst mindestens einen Sender (4) der drahtlos Signale überträgt und die Signale eine Anzahl vorkodierter Codes enthalten,
eine Anzahl von Anzeigegeräten (5), von denen jedes über einen Empfänger (7) verfügt, der so individuell vorcodiert ist mit einem Code, dass er ein diesen Code enthaltendes drahtlos übertragenes Signal empfängt, um einen Rufer (8) zu aktivieren, der mit einem Ton- und/oder Lichtsignal den Gast informiert, dem das Anzeigegerät (5) im Zusammenhang mit seiner Bestellung übergeben wurde,
und bei dem jedes Anzeigegerät (5) bevorzugt ein flaches Gehäuse (11) aufweist, in dem der Empfänger (7) zusammen mit dem Rufer (8) angeordnet sind, **dadurch gekennzeichnet, dass** ein Text (12) und/oder eine Illustration außen auf dem Gehäuse (11) angebracht sind, die mindestens eine Abbildung des zu diesen Anzeigegerät (5) gehörenden Codes enthalten, so dass das Anzeigegerät (5) wie ein Coupon wirkt, der durch den Code des Anzeigegerätes (5) den Gast eindeutig mit dem bestellten Produkt verbindet, und dass ein Magazin (19) Bestandteil des Systems ist, in dem vorzugsweise übereinander die nicht in Benutzung befindlichen Anzeigegeräte (5) stapelbar sind, und das Magazin (19) einen Magnetstreifen (17) enthält, der sich entlang der gestapelten Anzeigegeräte (5) erstreckt und zum Schalten Magnetleistungsschalter (10) der Anzeigegeräte (5) dient.

2. Signalsystem nach Anspruch 1, **dadurch gekennzeichnet, dass** eine Fernbedienung (1) mit einer Tastatur (2) so angeordnet sind, dass bei der Eingabe von einem der vorcodierten Codes der Sender (4) drahtlos ein Signal überträgt, das diesen Code enthält.

3. Signalsystem nach Anspruch 1 oder 2, **dadurch gekennzeichnet, dass** der Sender (4) an einem verhältnismäßig hohen Platz wie der Decke des Restaurants angeordnet ist.

4. Signalsystem nach Anspruch 1,2 oder 3, **dadurch gekennzeichnet, dass** der Sender (4) die Signale drahtlos in Form von Infrarotlicht überträgt.

5. Signalsystem nach einem der Ansprüche 1 bis 4, **dadurch gekennzeichnet, dass** weiterhin eine Batterie (9) im Gehäuse (11) angeordnet ist, die über den Magnetleistungsschalter (10) den Empfänger (7) und den Rufer (8) mit Strom versorgt.

6. Signalsystem nach Anspruch 1, **dadurch gekennzeichnet, dass** der Magnetfluss am Boden des Magazins (19) unterbrochen wird durch eine überwiegend transversale Ausdehnung gegenüber dem Magnetstreifen (17).

## Revendications

1. Système de signalisation pour commander le service dans un restaurant où un client, par exemple à un comptoir, peut commander un produit tel qu'un repas chaud pour le retirer ultérieurement, le système comprend au moins un émetteur (4) agencé de manière, quand il fonctionne, à émettre des signaux sans fil qui représentent un nombre de codes prédéterminés, un certain nombre d'indicateurs (5), et ayant chacun son propre récepteur (7) qui est codé préalablement et individuellement avec l'un des codes pour, à la réception d'un signal sans fil représentant le code correspondant, activer un dispositif (8) d'appel appartenant à l'indicateur afin d'appeler, au moyen d'un signal sonore et/ou lumineux, un client à qui a été attribué l'indicateur en question en liaison avec sa commande, chaque indicateur (5) comprend un boîtier (11) plat de préférence, et ledit récepteur (7) et ledit dispositif (8) d'appel sont incorporés dans ledit boîtier (11),
**caractérisé en ce qu'**un texte (12) et/ou une illustration comprenant au moins la marque du code correspondant sont placés à l'extérieur du boîtier (11) de sorte que l'indicateur soit disposé comme un ticket, qui au moyen du code de l'indicateur établit uniquement une liaison entre le client et le produit commandé, et **en ce qu'**un magasin (19) fait partie du système pour, de préférence par empilement vertical, stocker des indicateurs (5) qui ne sont pas utilisés, et que ce magasin comprend une liste magnétique (17) s'étendant le long des indicateurs empilés et servant à mettre en position d'arrêt des interrupteurs d'alimentation magnétique (10) de ces indicateurs (5).

2. Système de signalisation selon la revendication 1, **caractérisé en ce qu'**un dispositif (1) de télécommande ayant un clavier (2) disposé de manière à, lors de l'entrée de l'un de chacun des codes prédéterminés, amener l'émetteur (4) à émettre un signal sans fil qui représente le code introduit, fait partie de l'émetteur.

3. Système de signalisation selon la revendication 1 ou 2, **caractérisé en ce que** l'émetteur (4) est placé en un endroit relativement élevé, tel qu'un plafond du restaurant.

4. Système de signalisation selon la revendication 1, 2 ou 3, **caractérisé en ce que** l'émetteur (4) est agencé pour émettre des signaux sans fil sous la forme de rayons infrarouges.

5. Système de signalisation selon l'une quelconque des revendications 1 à 4, **caractérisé en ce qu'**une batterie (9) est incorporée en outre dans le boîtier (11) pour alimenter en courant, par l'intermédiaire du interrupteur d'alimentation magnétique (10), le récepteur (7) et le dispositif (8) d'appel.

6. Système de signalisation selon la revendication 1, **caractérisé en ce qu'**une tige magnétique du magasin en sa partie inférieure a une butée s'étendant surtout transversalement à la liste magnétique (17).
